# EUROPÄISCHE PATENTANMELDUNG

(11) **EP 1 130 876 A2**
(43) Veröffentlichungstag der Anmeldung: **05.09.2001**
(21) Anmeldenummer: 01105039.0
(22) Anmeldetag: 01.03.2001
(51) Int. Cl.: H04L 29/06

(54) **Verfahren zur Modellierung eines Kommunikationsprotokolls**

(30) Priorität: 02.03.2000 DE 10009999
(71) Anmelder: Tenovis GmbH & Co. KG, 60362 Frankfurt am Main (DE)
(72) Erfinder: Menk, Klaus-Dieter, 65597 Huenfelden-Ohren (DE)
(74) Vertreter: Leson, Thomas Johannes Alois, Dipl.-Ing.

(57) **Zusammenfassung**

Bei einem Verfahren zur Kopplung einer Applikation mit einer Schnittstelle eines ersten Standards an eine Kommunikationsverbindung mit einer Schnittstelle eines zweiten Standards, erfolgt die Kommunikation über einen Adapterprozess, welcher Schnittstellen sowohl des ersten Standards als auch des zweiten Standards bereitstellt. Innerhalb des Adapterprozesses erfolgt die Modellierung der Schicht eines Kommunikationsprotokolls mit Hilfe eines Computerprogramms, in dem die Schicht als Objekt einer objektorientierten Programmiersprache definiert wird.

## Beschreibung

### Technisches Gebiet

Die Erfindung betrifft ein Verfahren zur Modellierung der Schicht eines Kommunikationsprotokolls mit Hilfe eines Computerprogramms.

### Stand der Technik

Die Kommunikation zwischen informationsverarbeitenden Systemen wie zum Beispiel Nachrichtenanlagen oder Rechnernetzen findet mit Hilfe sogenannter Kommunikationsprotokolle statt, in welchen festgelegt ist, wie zu übertragende Informationen zum Zwecke der Übertragung codiert und decodiert werden. Ein Kommunikationsprotokoll besteht dabei gemäß dem Architekturmodell der Internationalen Standardisierungsorganisation ISO aus sieben Schichten (sogenanntes OSI-Referenzmodell, OSI = "Open Systems Interconnection"). Bei den Schichten handelt es sich dabei der Reihe nach um die Anwendungsschicht, die Darstellungsschicht, die Sitzungsschicht, die Transportschicht, die Netzwerkschicht, die Sicherungsschicht und die physische Schicht. Die Realisierung der genannten Schichten und der zwischen ihnen gelegenen Schnittstellen kann je nach zugrunde liegendem Gerät oder Computerprogramm unterschiedlich erfolgen. Damit zwei verschiedene Geräte beziehungsweise Applikationen miteinander kommunizieren und dabei Informationen austauschen können, ist es erforderlich, dass es in ihren jeweiligen Kommunikationsprotokollen wenigstens eine Schicht gibt, die bei beiden gleich ist, so dass beide hierauf aufbauen können. In der Regel ist die unterste, physische Schicht (zum Beispiel das Telefonnetz) für beide Applikationen gleich.

Ein Beispiel für ein Gerät, das mindestens ein Kommunikationsprotokoll unterstützen muss, ist eine digitale Telefonanlage. In der Regel besitzen solche Telefonanlagen mehrere verschiedene physikalische Schnittstellen und unterstützen mehrere verschiedene Kommunikationsprotokolle.

Um die Kommunikation einer solchen Telefonanlage mit einer Applikation (zum Beispiel Fax- oder E-Mail-Programm auf einem Computer) zu ermöglichen, muss in der Regel die Applikation so angepasst werden, dass sie mit den Kommunikationsprotokollen beziehungsweise Schnittstellen der Telefonanlage kompatibel ist. Hierzu ist mit erheblichem Aufwand jeweils ein eigenes Computerprogramm (ein Treiber) zu erstellen, welches die Verknüpfung der Applikation mit der Telefonanlage beziehungsweise deren Kommunikationsprotokoll ermöglicht.

### Darstellung der Erfindung, Aufgabe, Lösung, Vorteile

Aufgabe der vorliegenden Erfindung war es, ein Verfahren zur Verfügung zu stellen, mit dem die Kopplung von Applikationen und/oder Geräten mit verschiedenen Kommunikationsprotokollen und Schnittstellen vereinfacht möglich ist.

Diese Aufgabe wird durch ein Verfahren nach Anspruch 1 gelöst. Das Verfahren erlaubt die Kopplung einer Applikation mit einer Schnittstelle eines ersten Standards an eine Kommunikationsverbindung mit einer Schnittstelle eines zweiten Standards und ist dadurch gekennzeichnet, dass die Kommunikation über einen Adapterprozess erfolgt, welcher Schnittstellen sowohl des ersten Standards als auch des zweiten Standards bereitstellt. Der Vorteil der Lösung besteht darin, dass verschiedene Schichten kombiniert werden können. So ist es z.B. möglich, dass eine Schicht, die über TCP/IP kommunizieren will, nichts davon mitbekommt, ob hier noch eine Umsetzung auf X224/X75/ISDN-S0 stattfindet. Welche Schichten wie zum Einsatz kommen, kann konfiguriert werden. Da alle Schichten die gleichen Schnittstellen nutzen bzw. bereitstellen, ist der Austausch und die Kombinationsmöglichkeit gewährleistet.

Gemäß Anspruch 2 erfolgt enthält der Adapterprozess vorteilhafterweise die Modellierung einer oder mehrerer Schichten eines Kommunikationsprotokolls mit Hilfe eines Computerprogramms. Vorzugsweise wird dabei eine Schicht als Objekt einer objektorientierten Programmiersprache definiert. Dieses Verfahren erlaubt eine möglichst große Entkopplung des Modells des Kommunikationsprotokolls von der konkreten Arbeitsweise dieses Protokolls. Mit der objektorientierten Programmierung ist es möglich, die verschiedenen Schichten und Schnittstellen eines Kommunikationsprotokolls so abstrakt zu modellieren, dass die Kommunikation zwischen zwei Parteien auch dann möglich ist, wenn beide andere physikalische Schnittstellen und Transportprotokolle unterstützen. Es kann ein aus mehreren Schichten aufgebautes Kommunikationsprotokoll komplett nachgebildet werden. Hierbei wird die Möglichkeit der Vererbung von Eigenschaften in einer objektorientierten Programmiersprache ausgenutzt, das heißt, dass die Schichten eines Kommunikationsprotokolls ihre Eigenschaften und ihre Definition von übergeordneten beziehungsweise anderen Schichten übernehmen (erben) können. Weiterhin ist es durch die dynamische Bindung bei den objektorientierten Programmiersprachen möglich, dass während der Laufzeit des Modellierungsprogramms unterschiedliche Methoden über dieselben Aufrufe realisiert werden. Eine mit dem erfindungsgemäßen Verfahren modellierte Kommunikationsschnittstelle kann daher sehr flexibel und ohne Änderung der grundlegenden Routinen an verschiedene Kommunikationsprotokolle und Schnittstellen angepasst werden.

Nach Anspruch 3 erfolgt die Kommunikation zwischen der Applikation und dem Adapterprozess (vorzugsweise auf OSI-Schicht 7) über Meldungen. Wie die Meldungen in den unteren Schichten transportiert und gesichert werden, braucht die Applikation nicht zu wissen. Mit diesem Ansatz können Applikationen, die auf dieser Schnittstelle programmiert wurden, mit Prozessen über TCP/IP kommunizieren, die eine Umsetzung in andere Protokolle vornehmen und andere physikalische Schnittstellen bedienen. Mit dem Ansatz wird daher eine sehr hohe Flexibilität erreicht und den Applikationen ermöglicht, auch zukünftig Protokolle und Schnittstellen bedienen zu können.

Gemäß Anspruch 4 wird kann als Protokoll der Meldungen insbesondere auf der OSI-Schicht 7 die Sprache XML zur Codierung verwendet werden. Hiermit kann man sicher sein, dass die Applikationen sich auf fast allen denkbaren Schnittstellen anpassen können. XML (eXtensible Markup Language) ist eine Sprache, mit der sich Auszeichnungssprachen definieren lassen. XML ist eine verkürzte Version der Standard Generalized Markup Language (SGML).

### Bester Weg zur Ausführung der Erfindung

Im folgenden wird die Erfindung mit Hilfe der Figuren beispielhaft erläutert. Es zeigen:
- Fig. 1: schematisch einen Ausschnitt aus einem mehrschichtigen Kommunikationsprotokoll;
- Fig. 2: die Anbindung einer Applikation über XML, und
- Fig. 3: ein Beispiel für einen Kommunikationsablauf in einer Telefonanlage.

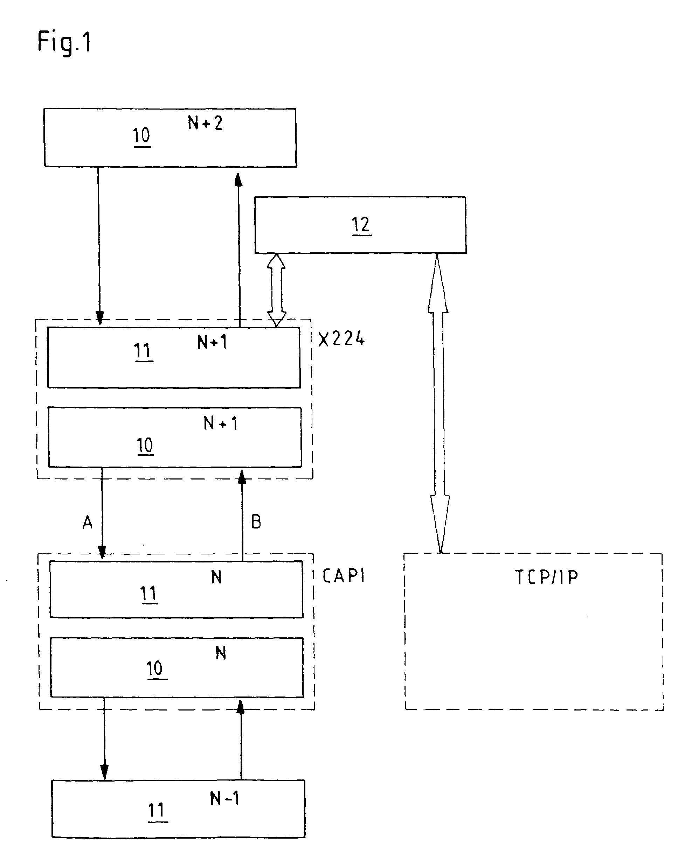

Figur 1 zeigt schematisch einen Ausschnitt aus einem mehrschichtigen Kommunikationsprotokoll, welches entsprechend dem erfindungsgemäßen Verfahren modelliert wird. Bei dem Verfahren wird jede physikalische Schnittstelle oder Kommunikationsschnittstelle in ein sogenanntes Provider Objekt abstrahiert. Dieses wirkt mit einem User Objekt zusammen, welches auf das Provider Objekt gesetzt wird und mit ihm über die Befehle "sendData" (A) und "datalnd" (B) Informationen austauscht. Zur Modellierung der Schicht eines Kommunikationsprotokolls wird diese wie aus der Fig. 1 ersichtlich auf die beiden Basisobjekte User (10) und Provider (11) abgebildet. Die Protokollschicht enthält sowohl eine Provider als auch eine User Schicht, da sie für die darüber gelegene Schicht der Provider und für die darunter gelegene Schicht der User ist.

Aufgrund der objektorientierten Programmierung des Kommunikationsprotokolls lassen sich die verschiedenen Schichten durch Vererbung abbilden. Für das Erzeugen einer Verbindung werden sogenannte Factories benutzt, die die entsprechenden Objekte instanzieren.

Alle Schnittstellen (Treiber oder Betriebssystem-Schnittstellen), die das Programm verlassen, werden als Provider modelliert. Es kann zur Laufzeit des Programms festgelegt werden, wie die Schichten und Schnittstellen verknüpft sind. Diese Möglichkeit wird insbesondere aufgrund der objektorientierten Programmierung gewährleistet.

Bei den in der Fig. 1 dargestellten Schichten kann es sich bei der Schicht N+1 zum Beispiel um die OSI-Schicht 4 gemäß dem Protokoll X224 handeln, während die darunter gelegene Schicht N eine CAPI-Schnittstelle ist.

Um eine Verknüpfung mit anderen Schnittstellen und Protokollen gleicher Ebene zu erreichen, sind sogenannte Brücken (12) notwendig. Eine derartige Brücke ist in der Fig. 1 dargestellt und verbindet zwei Schichten verschiedener Kommunikationsprotokolle. Brücken haben zwei User-Schnittstellen und stellen ein Bindeglied zwischen zwei unterschiedlichen Kommunikationssäulen dar.

Mit dem erfindungsgemäßen Programm lassen sich Applikationen mit unterschiedlichen Schnittstellen und Kommunikationsprotokollen verbinden. Wird zum Beispiel eine andere Schnittstelle in einer Telefonanlage implementiert, dann müssen nicht vorhandene Applikationen hieran angepasst werden, sondern lediglich eine neue Konfiguration des oben beschriebenen Umsetzers für Schnittstellen erfolgen.

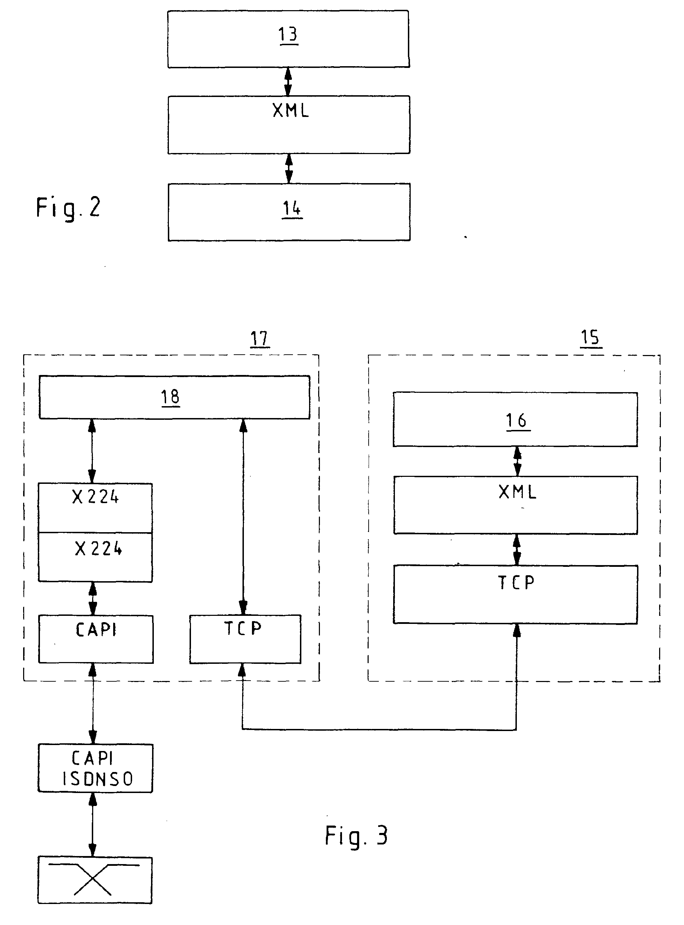

In Figur 2 ist der Ablauf dargestellt, der sich bei Verwendung der Sprache XML zur Kommunikation einer Applikation (13) mit OSI-Transportschichten (14) ergibt. Durch Anwendung einer breit eingeführten und standardisierten Sprache wie z.B. XML kann man sicher sein, dass die Applikationen sich auf fast allen denkbaren Schnittstellen anpassen können.

Figur 3 zeigt ein spezielles Beispiel für die Anpassung einer Applikation (15) mit der Applikations-Logik (16), welche über TCP/IP kommunizieren möchte, an eine CAPI ISDN S0 Schnittstelle. Die Anpassung geschieht über einen Adapterprozess (17), welcher erfindungsgemäß aus mehreren Providern und Usern zusammengesetzt ist.

Dabei kommuniziert ein TCP-Provider einerseits mit der Applikation (15) und andererseits mit einer Brücke (18). Die Brücke (18) ist wiederum über eine Schicht aus X224-Provider und X224-User mit einem CAPI-Provider verbunden. Der CAPI-Provider stellt dann seinerseits die Verbindung nach außen zur CAPI ISDN SO Schnittstelle her.

Hat eine andere Telefonanlage andere Transportschichten bzw. andere physikalische Zugänge, dann kann dies durch eine Erweiterung oder einen anderen vorgeschalteten Adapterprozess erfolgen. Die Applikation muss nicht verändert werden. Das ist besonders vorteilhaft, da es meistens viele Applikationen gibt, die dann durch den einen neuen Adapterprozess in der Lage sind, auch mit neuen Schnittstellen zu kommunizieren.

Bei einem Verfahren zur Kopplung einer Applikation mit einer Schnittstelle eines ersten Standards an eine Kommunikationsverbindung mit einer Schnittstelle eines zweiten Standards, erfolgt die Kommunikation über einen Adapterprozess, welcher Schnittstellen sowohl des ersten Standards als auch des zweiten Standards bereitstellt. Innerhalb des Adapterprozesses erfolgt die Modellierung der Schicht eines Kommunikationsprotokolls mit Hilfe eines Computerprogramms, in dem die Schicht als Objekt einer objektorientierten Programmiersprache definiert wird.

## Patentansprüche

1. Verfahren zur Kopplung einer Applikation mit einer Schnittstelle eines ersten Standards an eine Kommunikationsverbindung mit einer Schnittstelle eines zweiten Standards,
**dadurch gekennzeichnet**, dass die Kommunikation über einen Adapterprozess erfolgt, welcher Schnittstellen sowohl des ersten Standards als auch des zweiten Standards bereitstellt.

2. Verfahren nach Anspruch 1,
**dadurch gekennzeichnet**, dass der Adapterprozess eine Modellierung von Schichten eines Kommunikationsprotokolls mit Hilfe eines Computerprogramms enthält, wobei vorzugsweise eine Schicht als Objekt einer objektorientierten Programmiersprache definiert wird.

3. Verfahren nach einem der Ansprüche 1 oder 2,
**dadurch gekennzeichnet**, dass die Kommunikation zwischen der Applikation und dem Adapterprozess über Meldungen erfolgt.

4. Verfahren nach einem der Ansprüche 1 bis 3,
**dadurch gekennzeichnet**, dass zur Kommunikation mit dem Adapterprozess eine Auszeichnungssprache, vorzugsweise XML, verwendet wird.
